Europäisches Patentamt

European Patent Office

Office européen des brevets

(11) Publication number: **0 410 677 A2**

# EUROPEAN PATENT APPLICATION

(21) Application number: 90308058.8

(22) Date of filing: 24.07.90

(51) Int. Cl.5: **B23B 27/14**

(30) Priority: 25.07.89 GB 8916955

(43) Date of publication of application:
30.01.91 Bulletin 91/05

(84) Designated Contracting States:
AT BE CH DE FR GB IT LI SE

(71) Applicant: PACINI LIMITED
Isle of Man Freeport, P.O. Box 6
Ballasalla, Isle of Man(GB)

(72) Inventor: Notter, Theo Axel
29 Langley Drive Camberley
Surrey GU15 3TB(GB)

(74) Representative: Jones, Alan John et al
CARPMAELS & RANSFORD 43 Bloomsbury
Squareare
London, WC1A 2RA(GB)

(54) Tool insert.

(57) A tool insert comprises a support (10) adapted to be secured to a tool. The support (10) has major flat surfaces (12, 14) on each of opposite sides thereof and one or more side surfaces (16) joining the major flat surfaces (12, 14). A recess (20) is formed in a corner of the support, the recess (20) extending from one major flat surface (12) to the other (14). A composite abrasive compact consisting of a cemented carbide backing (22) having bonded thereto an abrasive compact (24) is located in the recess (20) and is bonded to the support (10). The abrasive compact (24) extends from one major flat surface (12) to the other major flat surface (14) and provides cutting edges (28, 30) on both ends thereof.

Fig. 1

Fig. 2

EP 0 410 677 A2

## TOOL INSERT

### BACKGROUND OF THE INVENTION

This invention relates to a tool insert.

One type of tool insert presently in commercial use consists of a support having major flat surfaces on each of opposite sides thereof and a recess formed in a corner of the support, the recess extending partially into the support from one of the major flat surfaces. Located in the recess is a cutting element consisting of a cemented carbide backing to which is bonded a diamond or CBN-containing layer, this layer providing a cutting edge for the insert.

### SUMMARY OF THE INVENTION

According to the present invention, there is provided a tool insert comprising a support adapted to be secured to a tool, the support having major flat surfaces on each of opposite sides thereof and one or more side surfaces joining the major flat surfaces, a recess formed in a corner or edge of the support, the recess extending from one major flat surface to the other, and a composite abrasive compact consisting of a cemented carbide backing having bonded thereto an abrasive compact located in the recess and bonded to the support, the abrasive compact extending from the one major flat surface to the other major flat surface and providing cutting edges on both ends thereof.

### DESCRIPTION OF THE DRAWINGS

Figure 1 illustrates a plan view of an embodiment of the invention; and
Figure 2 illustrates an end view in the direction of arrow A of Figure 1.

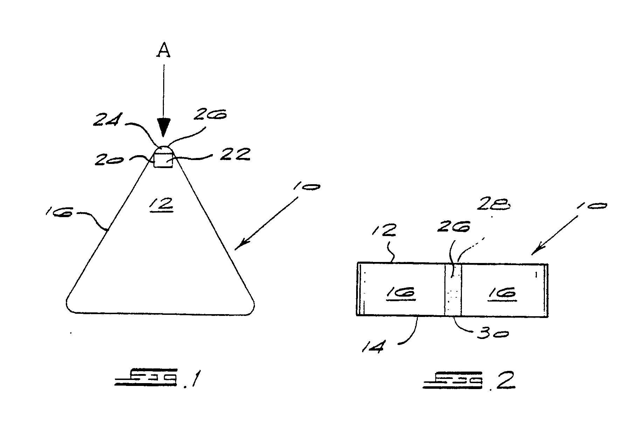

### DESCRIPTION OF EMBODIMENTS

The abrasive compact which forms part of the composite abrasive compact will consist of a mass of ultra-hard abrasive particles bonded into a hard conglomerate under elevated temperature and pressure conditions at which the abrasive particle is crystallographically stable. The ultra-hard abrasive particles will generally be diamond or cubic boron nitride.

The abrasive compact may, in one embodiment, consist of a mass of essentially discrete cubic boron nitride particles, present in an amount of 40 to 60% by volume, and a second phase of a suitable ceramic such as titanium carbide.

The abrasive compact can also consist of a mass of the ultra-hard abrasive particles present in an amount of at least 70% by volume and forming a polycrystalline mass. In such compacts, there will be a substantial amount of direct particle-to-particle bonding. The compact may contain a second phase.

The cemented carbide backing may be any known in the art, preferably cemented tungsten carbide.

Bonding of the composite abrasive compact to the support of the tool insert will be achieved through the cemented carbide backing. Typically, the cemented carbide backing will be brazed to the support.

The support will typically be triangular, rectangular or square in plan.

An embodiment of the invention will now be described with reference to the accompanying drawing. Referring to this drawing, there is shown a tool insert comprising a support 10 having major flat surfaces 12, 14 on each of opposite sides thereof. The insert is triangular in plan. The major flat surfaces 12, 14 are joined by vertical sides 16. The support will typically be made of a suitable steel or cemented carbide.

A recess 20 is formed in one of the corners of the triangle. The recess 20 extends from one major flat surface to the other major flat surface and accommodates a composite abrasive compact which consists of a cemented carbide backing 22 to which is bonded an abrasive compact 24. The cemented carbide backing 22 is brazed to the support 10. The abrasive compact 24 presents a curved surface 26 which extends from one major flat surface of the support to the other. This curved surface 26 has a curved top edge 28 and a curved bottom edge 30, both of which provide cutting edges for the insert.

The insert will be mounted on a tool in the conventional manner so as to present one of the cutting edges 28, 30 for cutting. When this edge dulls, the insert can simply be turned over and the other cutting edge used.

The support 10 may have a hole extending from one major flat surface to the other formed therein. This hole may accommodate a screw or bolt for securing the insert to a tool.

When the abrasive compact is a cubic boron nitride compact, the tool insert will generally be used for the finish turning or milling of a hardened steel such as a D-2 or M-2 steel.

When the abrasive compact is a diamond compact, the tool insert will generally be used for the machining of abrasive non-ferrous materials.

**Claims**

1. A tool insert comprises a support (10) adapted to be secured to a tool, the support (10) having major flat surfaces (12, 14) on each of opposite sides thereof and one or more side surfaces (16) joining the major flat surfaces (12, 14), a recess (20) formed in a corner or edge of the support (10), the recess (20) extending from one major flat surface (12) to the other (14), and a cgmposite abrasive compact consisting of a cemented carbide backing (22) having bonded thereto an abrasive compact (24) located in the recess (20) and bonded to the support (10), the abrasive compact (24) extending from the one major flat surface (12) to the other major flat surface (14) and providing cutting edges (28, 30) on both ends thereof.

2. A tool insert according to claim 1 wherein the support (10) has a triangular, rectangular or square shape in plan.

3. A tool insert according to either claim 1 or claim 2 wherein the cutting edges (28, 30) are curved cutting edges.

A

24    26

20    22

16    12    10

_FIG_.1

12    28    10

26

16    16

14    30

_FIG_.2